# EUROPEAN PATENT SPECIFICATION

(11) **EP 3 212 298 B1**
(45) Date of publication and mention of the grant of the patent: **26.02.2020**
(21) Application number: 15881380.8
(22) Date of filing: 29.07.2015
(51) Int. Cl.: A63F 13/98, A63F 13/92, A63F 13/24, A63F 13/23

(54) **COMBINATION OF COMPUTING DEVICE AND GAME CONTROLLER WITH FLEXIBLE BRIDGE SECTION**
KOMBINATION EINES COMPUTERS UND EINES SPIELESTEUERGERÄTS MITTELS EINES FLEXIBLEN BRÜCKENABSCHNITTS
COMBINAISON D'UN DISPOSITIF INFORMATIQUE ET D'UNE MANETTE DE JEU AU MOYEN D'UNE SECTION DE RACCORD SOUPLE

(30) Priority: 02.02.2015 US 201514611804
(43) Date of publication of application: 06.09.2017
(73) Proprietor: Wikipad, Inc., Westlake Village, CA 91361 (US)
(72) Inventor: JOYNES, Matthew, R., Westlake Village, CA 91361 (US); TOWNLEY, Fraser, Pembroke, MA 02359 (US); DOOLEY, Daniel, P., Oklahoma City, OK 73120 (US)
(74) Representative: Walker, Ross Thomson
(86) International application number: PCT/US2015/042699
(87) International publication number: WO 2016/126283

(56) References cited:
- EP-A2- 2 772 825
- EP-A2- 2 772 825
- WO-A1-2015/006680
- US-A1- 2001 045 938
- US-A1- 2010 195 279
- US-A1- 2010 195 279
- US-B2- 9 126 119

## Description

### Background

EP2772825 discloses a combination of a tablet computer and a game controller with a flexible bridge section that is similar to the disclosed system.

WO2015/006680 and US2010/0195279 disclose modular arrangements of re-configurable game controllers.

### Summary of the Invention

The present invention as defined in the appended claims is directed to a combination of a computing device and a game controller with a structural bridge. In a preferred embodiment, a combination includes at least, but is not limited to, a computing device, the computing device providing a plurality of sides, each of the plurality of sides are disposed between an electronic display screen of the computing device and a back of the computing device, a communication port interacting with the computing device, the communication port providing a communication link and a pair of confinement structures, the pair of confinement structures adjacent to and confining the computing device on at least two opposing sides of the plurality of sides of the computing device, and an input device attached to and in electronic communication with the communication port, the input device providing a pair of control modules, the pair of control modules providing input module apertures, each input module aperture secures an instructional input device, wherein said input module apertures are adjacent each of the at least two opposing sides of the plurality of sides of the computing device, and wherein the input device is a separate and distinct structure from the communication port, forming no structural portion of the communication port.

### Brief Description of the Drawings

FIG. 1 is a front perspective view, with partial cutaway, of an embodiment an electronic game control apparatus constructed and operated in accordance with various embodiments disclosed and claimed herein.
FIG. 2 shows a back plan view of the apparatus of FIG. 1.
FIG. 3 displays a right side plan view, with partial cutaway, of the apparatus of FIG. 1, constructed in accordance with various embodiments disclosed and claimed herein.
FIG. 4 depicts a right side plan view of the apparatus of FIG. 1, constructed in accordance with various embodiments disclosed and claimed herein.
FIG. 5 illustrates a top perspective view of an embodiment of an input device of FIG. 1, constructed in accordance with various embodiments disclosed and claimed herein.
FIG. 6 is a block diagram of an embodiment of the apparatus of FIG. 1.
FIG. 7 is a block diagram of an alternate embodiment of the apparatus of FIG. 1.
FIG. 8 displays a front perspective view, with partial cutaway, of a combination electronic game control and information input device constructed and operated in accordance with various embodiments disclosed and claimed herein.
FIG. 9 depicts a back plan view of the combination of FIG. 8.
FIG. 10 illustrates a front perspective view, with partial cutaway, of an alternate embodiment of a combination electronic game control and information input device constructed and operated in accordance with various embodiments disclosed and claimed herein.
FIG. 11 shows a top perspective view of an embodiment of an input device with an integrated point of sale device, the input device is constructed in accordance with various embodiments disclosed and claimed herein.
FIG. 12 displays a front perspective view, with partial cutaway, of an alternate embodiment of a combination electronic game control and information input device, the information input device provides the integrated point of sale device.
FIG. 13 displays a front perspective view, with partial cutaway, of an alternative embodiment of a combination computing device and electronic game control, the electronic game control includes a pair of control modules linked one to the other by a bridge member.
FIG. 14 shows a back plan view of the combination computing device and electronic game control of FIG. 13.
FIG. 15 illustrates a top perspective view of the alternative embodiment of the combination computing device and electronic game control of FIG. 13.
FIG. 16 shows a back plan view of an alternative combination computing device with a communication port secured thereon, and an input device attached to the communication port.
FIG. 17 shows a top plan view of the communication port of FIG. 16.
FIG. 18 shows a side view in elevation of the communication port of FIG. 16.
FIG. 19 shows front and back views in elevation of a first selected confinement structure of the pair of confinement structures of the communication port of FIG. 16.
FIG. 20 shows front and back views in elevation of a second selected confinement structure of the pair of confinement structures of the communication port of FIG. 16.
FIG. 21 shows a bottom plan view of a first control module adjacent to a selected confinement structure of the pair of confinement structures of the communication port of FIG. 16.
FIG. 22 shows a bottom plan view of a first control module secured to a selected confinement structure of the pair of confinement structures of the communication port of FIG. 16.
FIG. 23 shows a side views in elevation of a first control module secured to a selected confinement structure of the pair of confinement structures of the communication port of FIG. 16.
FIG. 24 shows a view in perspective of a fastening mechanism of the communication port of FIG. 16.
FIG. 25 shows a back plan view of the combination computing device and electronic game control of FIG. 16 revealing, in cutout, a data storage device and an auxiliary power source.

### Detailed Description

The present invention as defined in the appended claims is directed to a combination of a computing device and a game controller with a structural bridge section. The present disclosure generally relates to a combination game controller and information input device directed to controlling electronic games and entry of information to a computing device, also referred to herein as video games, computer and applications games. The apparatus preferably includes a computing device, an electronic game communicating with the computing device, and an input device for controlling movement of a virtual object provided by the electronic game, and entry of information into the computing device. In a preferred embodiment, the input device includes a pair of opposing side structures adjacent opposing sides of plurality of sides of the computing device. The input device further preferably includes a plurality of input switches, wherein said input switches are adjacent each of the at least two opposing sides of the plurality of sides of the computing device, and a bridge structure disposed between the pair of sides to form a three sided structure. The third structure mitigates inadvertent removal of the computing device from the three sided structure when the computing device is fully nested within the three sided structure.

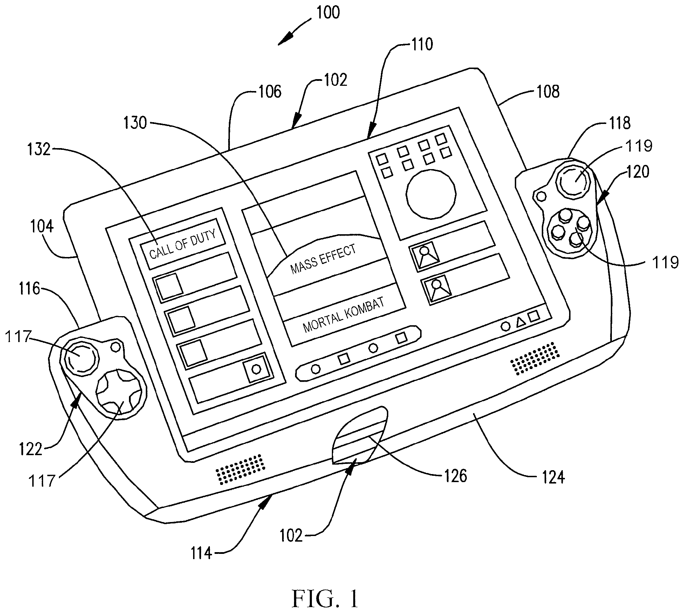

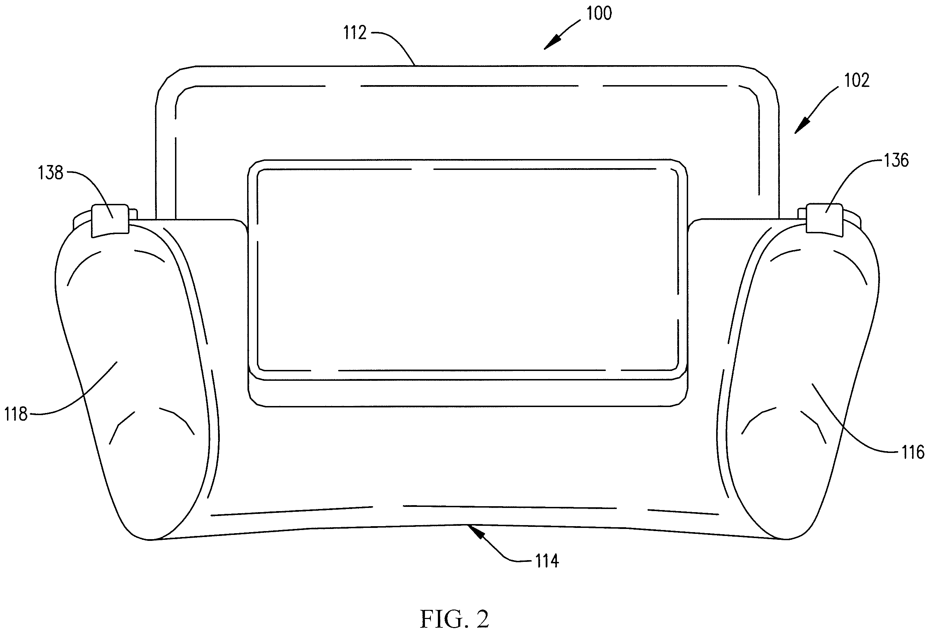

Turning to the drawings, FIG. 1 provides an exemplary game controller and information entry device ("G&D") 100 capable of being used in accordance with various embodiments of the present invention. The exemplary G&D 100 has at least a computing device 102 (also referred to herein as a computing device 102), which provides a plurality of sides, such as 104, 106, 108, and 126. Each of the plurality of sides 104, 106, and 108 are disposed between an electronic display screen 110, of the computing device 102, and a back 112 (shown by FIG. 2) of the computing device 102 operates. The G&D 100 further preferably includes an input device 114. The computing device 102 may take the form of a tablet computer, smart phone, notebook computer, or other portable computing device,

In a preferred embodiment, the input device 114 provides a pair of side structures, 116 and 118, with a bridge structure 115 disposed there between. One of the pair of side structures, for example 116, is adjacent to and confines the computing device 102 on a first side, such as 104 of the plurality of sides 104, 106, 108, and 126 of the computing device 102. The second side structure of the pair of side structures, such as 118, is adjacent to and confines the computing device 102 on a second side, such as 108, of the plurality of sides 104, 106, 108, and 126 of the computing device 102, wherein the first and second sides, such as 104 and 108, of the plurality of sides 104, 106, 108, and 126 of the computing device 102 are opposing sides of the plurality of sides 104, 106, 108, and 126, of the computing device 102.

In a preferred embodiment, the input device 114 further provides a plurality of removable game control modules 120 and 122, wherein the removable game control modules 120 and 122 are adjacent each of the at least two opposing sides 104 and 108, of the plurality of sides 104, 106, 108, and 126, of the computing device 102, and a bridge structure 124, disposed between the pair of side structures 116 and 118, and adjacent the third side 126, of the plurality of sides 104, 106, 108, and 126, of the computing device 102.

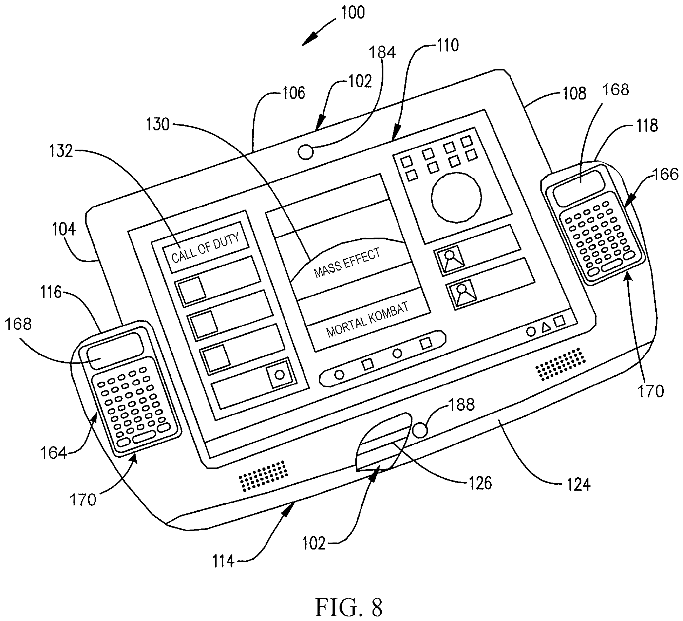

In a preferred embodiment, the removable game control modules 120 and 122 may be removed from the input device 114, and replaced by removable keyboard modules 164 and 166, of FIG. 8. To facilitate the exchange of modules, the input device preferably provides a pair of input module apertures 170. The removable keyboard modules collectively form a full function keyboard and each provide an auxiliary electronic display screen ("ADS") 168, each ADS 168 having at least the functionality of the electronic display screen 110.

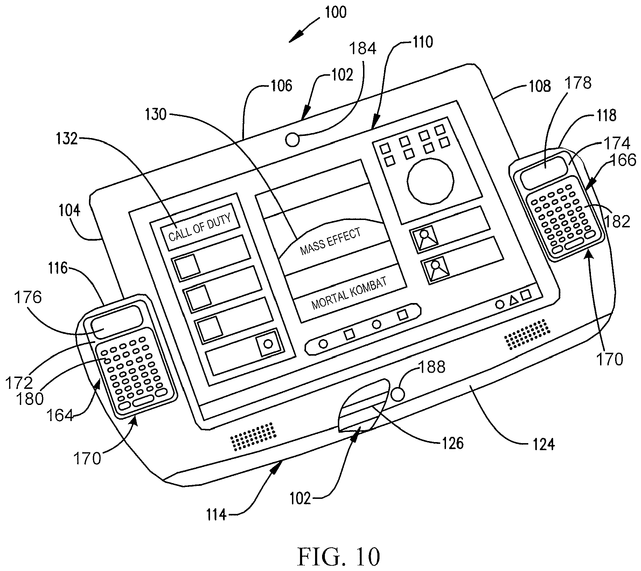

In an alternate embodiment, shown by FIG. 10, the removable keyboard modules 164 and 166 are a pair of touch responsive electronic display screens 172 and 174, each of the touch responsive electronic display screens having at least the functionality of the electronic display screen 110, include the functionality of a mouse pad portions 176 and 178, and selectively presents keys of a keyboard 180 and 182 for information entry. Preferably, the keys are virtual keys that respond to a touch by a user.

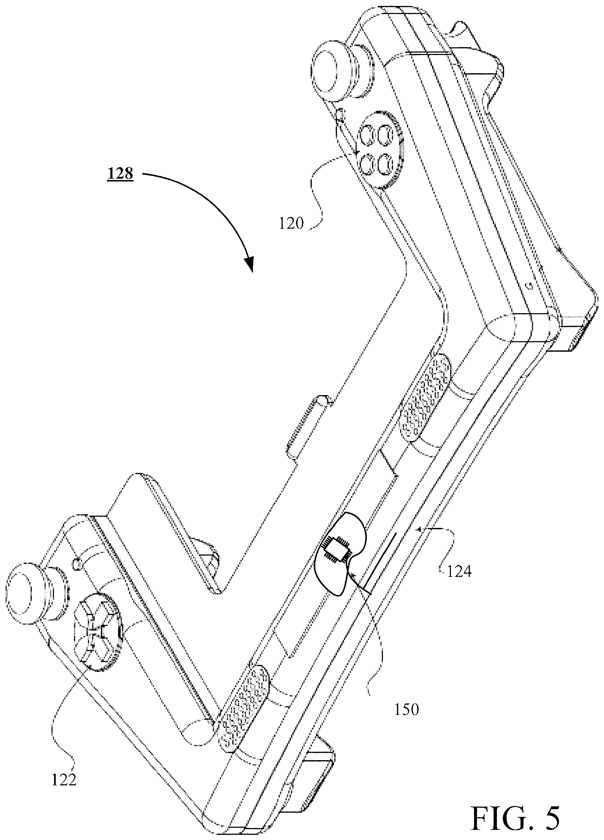

Returning to FIG. 1, preferably, the bridge structure 124 in combination with the pair of side structures 116 and 118 form a three sided structure 128 (of FIG. 5) (also referred to herein as a u-shaped structure 128 of the input device 114), in which the computing device 102 nests, such that the computing device 102 is confined by the u-shaped structure 128, and the u-shaped structure 128 mitigates inadvertent removal of the computing device 102 from the u-shaped structure 128 when the computing device 102 is fully nested within the three sided structure 128.

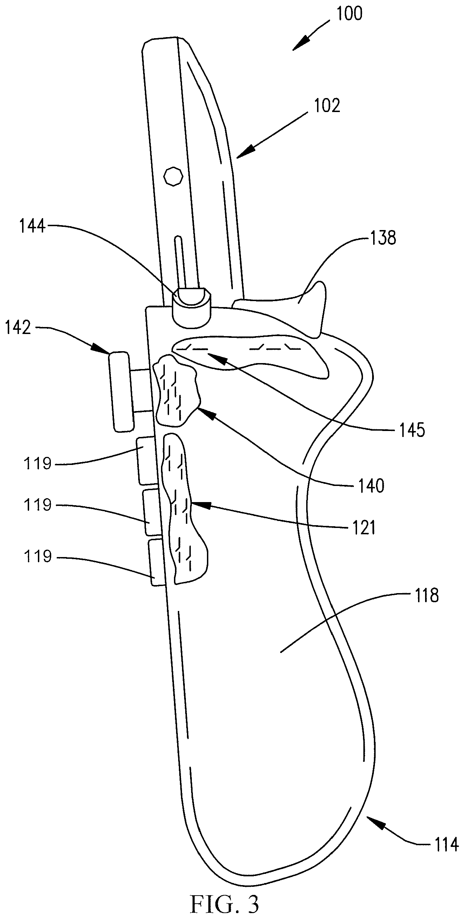

The G&D 100 of FIG. 1, further preferably includes a video game 130. Preferably, the video game 130 provides a virtual object 132 displayed by the electronic display screen 110, the virtual object 132 is responsive to input from the input device 114. An example of a response of the virtual object 132 would be movement of the virtual object 132, or the loading of an alternate computer game, based on a predetermined signal provided by the input device 114, or an appearance of a character. It is noted that FIG. 1 displays the housings of the plurality of switches, whereas at least some of the plurality of switches are shown in the partial cutaway of FIG. 3.

FIG. 2 depicts and reveals the back 112 of the computing device 102. Further shown by FIG. 2, is the input device 114, which provides a pair of trigger switches 136 and 138, supported by their corresponding side structures 116 and 118 respectively.

FIG. 3 shows that a predetermined number of the plurality of switches 140, collaborate with each other to form an input apparatus 142, the input apparatus 142 controls display of virtual objects displayed on the electronic display screen 110 of the computing device 102. Preferably, the input apparatus 142 is a joystick 142. FIG. 3 further shows that the input device 114 provides a plurality of buttons 144 and 119 of the removable game control modules 120, which activate corresponding switches 145 and 121. The main function of the trigger 138, the joystick 142, and the buttons 144 and 119 of the removable game control modules 120 is to govern the movement/actions of a playable body/object or otherwise influence events in a video game 130 (of FIG. 1) or an alternate computer game.

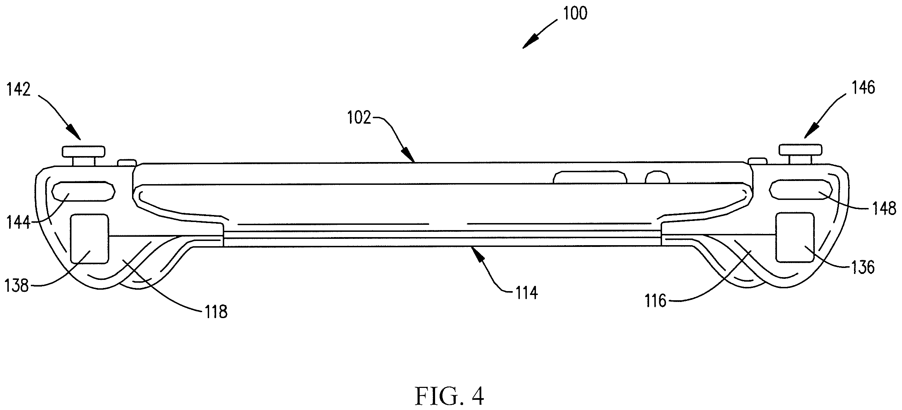

FIG. 4 shows the G&D 100, further includes a second joystick 146, and a second button 148, which are provided on the side structure 116, adjacent the trigger 136. While FIG. 5 shows the central processing unit (CPU) 150, of the input device 114.

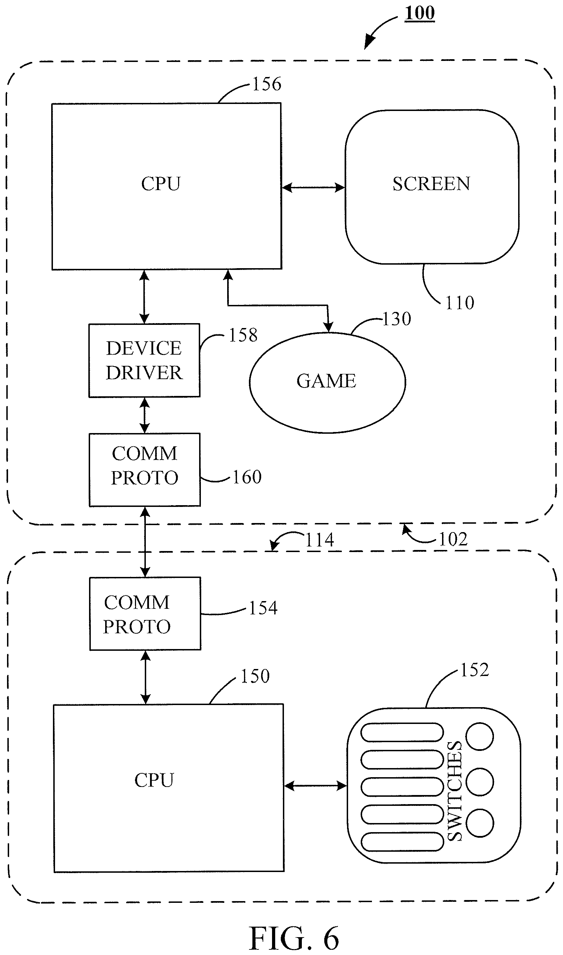

FIG. 6 shows the input device 114 includes the CPU 150, interacting with the plurality of switches 152, which preferably include at least switches 119 of the removable game control modules 120 (of FIG. 1), switches 117 of the removable game control modules 122 (of FIG.1), 136, 138, 142, 144, 146, and 148 (of FIGS. 2 and 3). FIG. 6 further shows the input device 114 includes a communications protocol 154 providing the communication link between the computing device 102, and the input device 114. In a preferred embodiment, a Universal Serial Bus (USB) communications protocol is utilized. However, as those skilled in the art will recognize, the communications protocol 154 is not limited to a USB protocol.

FIG. 6 further shows that the computing device 102 preferably includes at least a CPU 156, interacting with the electronic display screen 110, the video game 130, a device driver 158, which facilitates the interaction between the computing device 102 and the input device 114, and a communications protocol 160 providing the communication link between the computing device 102, and the input device 114. In a preferred embodiment, a Universal Serial Bus (USB) communications protocol is utilized. However, as those skilled in the art will recognize, the communications protocol 160 is not limited to a USB protocol.

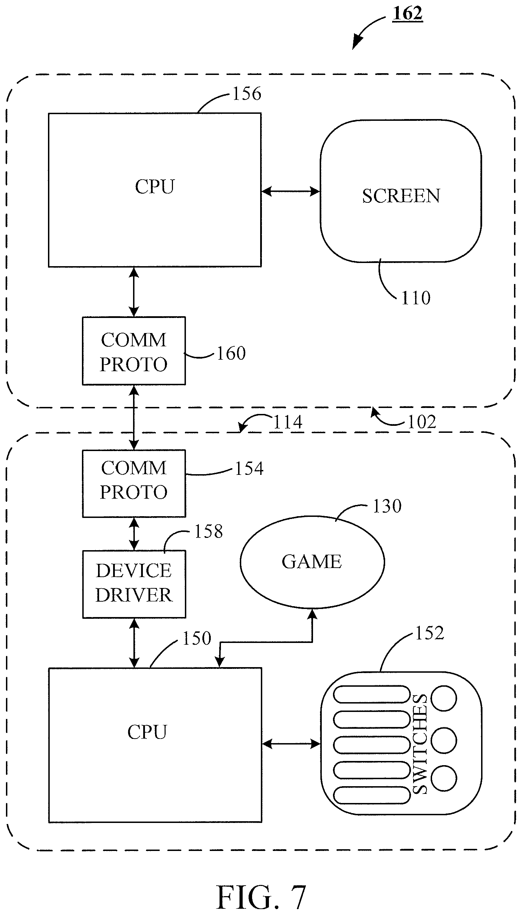

FIG. 7 shows an alternative embodiment of an exemplary game controller 162, in which the device driver 158 and the video game 130 are located in the input device 114.

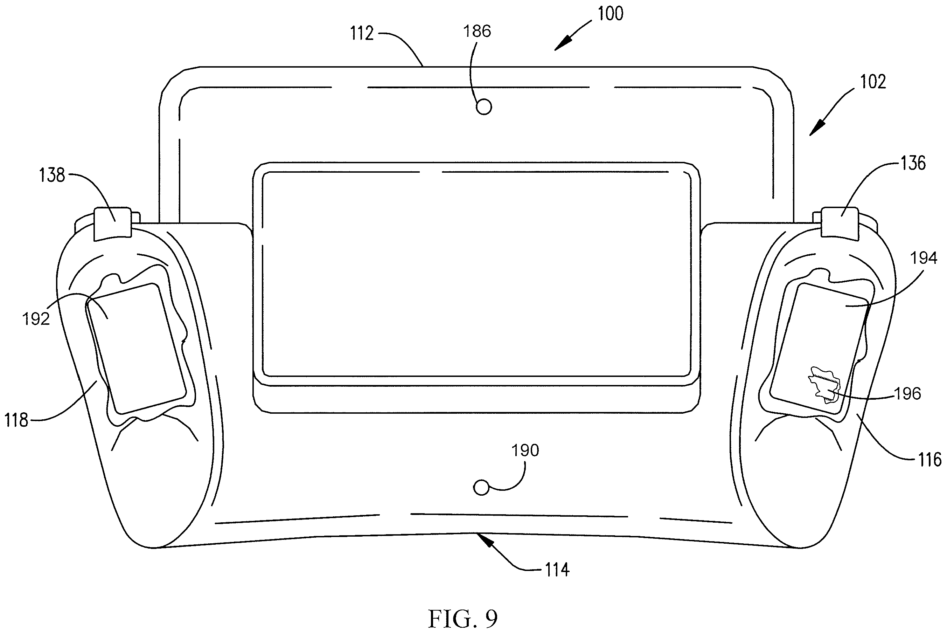

FIG. 8 shows in a preferred embodiment, the G&D 100 includes a first camera 184, on a first side of the computing device 102, a second camera 186, on the back side of the computing device 102 (shown by FIG. 9), a third camera 188 on a first side of the input device 114, and a fourth camera 190 on the back side of the input device 114 (shown by FIG. 9).

In a preferred embodiment, each of the four cameras may selectively function independently, or may be used in conjunction with one another, and each of the four cameras 184, 186, 188, and 190 are fully functional in capturing still and video images. Additionally, and preferably, the first and second cameras 184 and 186, are fully operative, even when the computing device 102 is detached from the input device 114, while the third and fourth cameras 188 and 190 are fully functional, even when the input device 114 is detached from the computing device 102.

In a preferred embodiment, when the computing device 102 is nested in the input device 114, the first and second cameras, 184 and 186, are responsive, either independently or simultaneously, to input from either the computing device 102, or the input device 114, depending on which device is selected for control of the first and second cameras, 184 and 186. Further, in the preferred embodiment, each the computing device 102 and the input device 114, are configured with a Bluetooth protocol stack communication feature, which permits the user to operate the first and second cameras, 184 and 186, of the computing device 102 with the input device 114, even when the computing device 102 is detached from the input device 114. Likewise, when the computing device 102 and the input device 114 are configured with a Bluetooth protocol stack communication feature, the user may operate the third and fourth cameras, 188 and 190, of the input device 114, using the computing device 102. In other words, in the preferred embodiment, each of the four cameras 184, 186, 188, and 190, may be selectively operated, individually or collectively, whether or not the computing device 102 is nested within the input device 114.

FIG. 9 shows that in a preferred embodiment, the input device 114, includes an auxiliary power source 192, and an auxiliary data storage device 194, which preferably includes a cache portion 196. Preferably, the auxiliary power source 192, is a lithium ion battery, which provides power to the input device 114, and the computing device 102, when the power source of the computing device 102 is depilated; and the auxiliary data storage device 194 is a solid state hard drive.

In the preferred embodiment, the cache 196 is sized to buffer synchronized input from each of the cameras 184, 186, 188, and 190, such that the auxiliary data storage device 194 may store and retrieve images, still or video, for display seamlessly, including a simultaneous output of video images recorded by each of the cameras 184, 186, 188, and 190.

In a non-limiting exemplary application of utilizing the cameras 184, 186, 188, and 190, the first camera 184 could be trained on an information presenter, while the second camera 186 is trained on a portion of an audience attending the presentation. The third camera 188, could be trained on a screen used by the presenter for presenting their information to the audience, while the fourth camera is trained on an alternate portion of the audience. By simultaneously replaying the recorded presentation, a response of the audience to the information, and sequence of information being presented, may be analyzed for fostering improvements to the presentation.

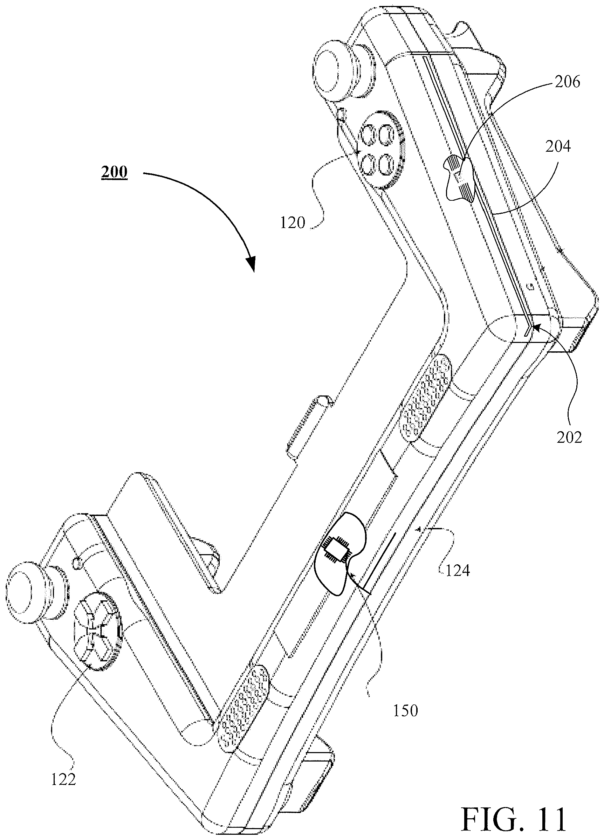

FIG. 11 shows an alternative embodiment of a video game controller 200, which provides an integrated transaction card input feature 202. Preferably, the integrated transaction card input feature 202, includes a transaction card slot 204, and a transaction card reader 206. In a preferred embodiment, the transaction card reader 206, is a magnetic strip reader, but as those skilled in the art will recognize, the transaction card reader can be, in the alternate: is an optical character recognition reader; a barcode reader; an object recognition reader, or a pattern recognition reader.

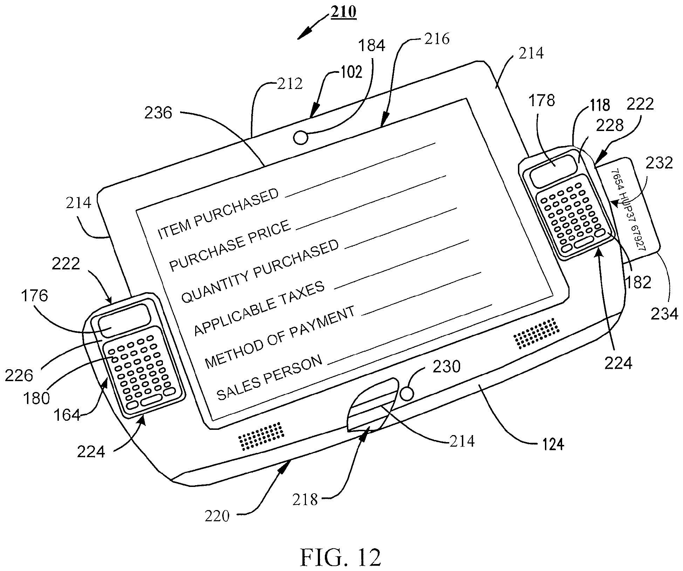

FIG. 12 shows that in a preferred embodiment, a combination computing device and electronic game controller with an integrated point of sale device 210 preferably includes a computing device 212, having a plurality of sides 214, each of the plurality of sides 214, are disposed between an electronic display screen 216, of the computing device and a back 218 of the computing device, and an input device 220, in electronic communication with the computing device 212. The input device 220 preferably provides side structures 222, adjacent to and confining the computing device on at least two opposing sides of the plurality of sides 214 of the computing device 212. The input device 220, further preferably provides input module apertures 224, each input module aperture 224, selectively accepts either a game control module, such as 102 and 122 of FIG. 1, or a removable keyboard module, such as 226 and 228. Preferably, the input module apertures 224 are adjacent each of the at least two opposing sides of the plurality of sides 214 of the computing device 212.

FIG. 12 further shows that in a preferred embodiment, the combination computing device and electronic game controller with an integrated point of sale device 210 preferably includes a camera 230, communicating with each the input device 220, and the computing device 212. The camera 230, selectively captures either still or video images, and that the input device 220, further provides an integrated transaction card input feature 232, which interacts with a transaction card 234, and that preferably, the input device is an electronic game controller 220. Preferably, the camera 230 is a first camera, having a lens facing the user while the user is facing the electronic display screen 216, and includes at least a second camera, such as 186 or 190 (of FIG. 9), having a lens facing in a direction opposite that of the first camera 184.

FIG. 12 additionally shows an application 236, displayed on the electronic display screen 216, of the computing device 212. Preferably, the application 236, displayed on the electronic display screen 216 of the computing device 212, is a point of sale transactional computer application, which interacts with the electronic game controller 220 and the computing device 212.

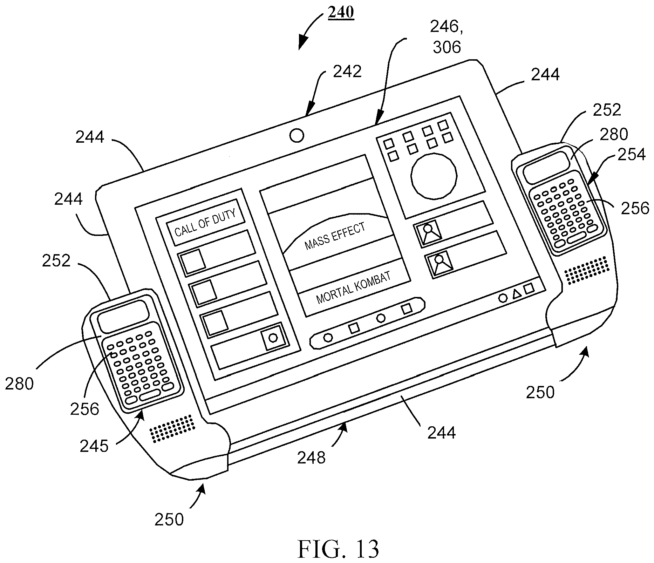

FIG. 13 shows an alternative embodiment of a combination computing device and electronic game control 240 (also referred to herein as a device 240). The computing device 242, preferably provides a plurality of sides 244, each of the plurality of sides are disposed between an electronic display screen 246, of the computing device 242, and a back 248 of the computing device 242.

Preferably, the electronic game controller 250 (also referred to herein as input device 250), is in electronic communication with the computing device 242. Preferably, the input device 250, provides a pair of control modules 252. The pair of control modules 252, are adjacent to and confining the computing device 242, on at least two opposing sides of the plurality of sides 244, of the computing device 242. The pair of control modules 252, preferably provide input module apertures 254, each input module aperture 254, secures an instructional input device 256. Preferably, the input module apertures 254, are adjacent each of the at least two opposing sides of the plurality of sides 244, of the computing device 242.

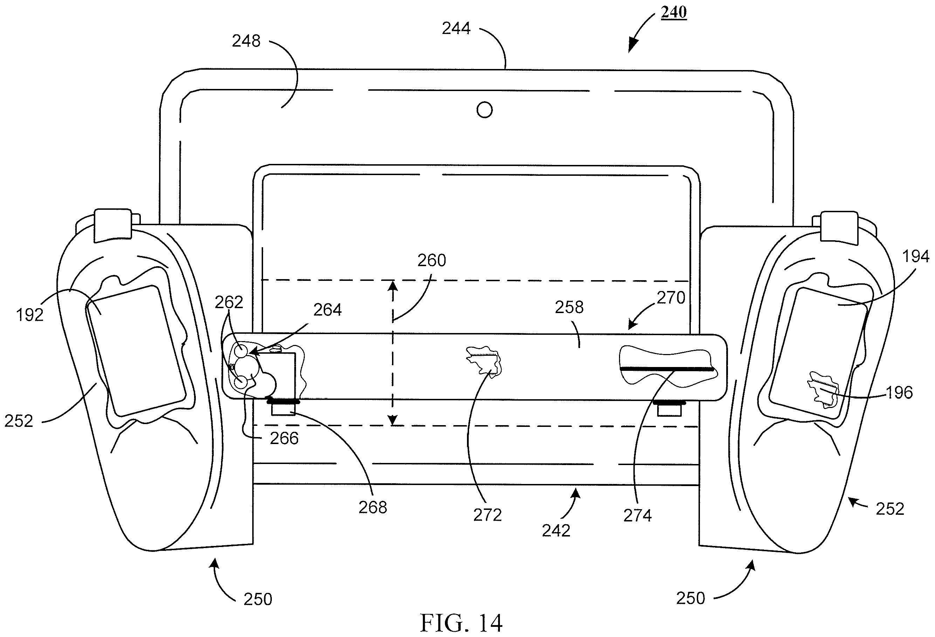

FIG. 14 shows the back 248, of the computing device 242, and the computing device 242, partially positioned within the input device 250. FIG. 14 further shows a structural bridge 258, securing the pair of control modules 252, one to the other, and communicating with the back 248, of the computing device 242, at a mid-region 260, of the back 248, of the computing device 242.

FIG. 14 further shows that the pair of control modules 252, provide a confinement boss 262, and the confinement boss 262 provides a fastening detent 264. The fastening detent 264, interacts with a retention member 266, to secure the structural bridge 258, to the pair of control modules 252. In a preferred embodiment, the retention member 266, is responsive to a catch 268, which preferably is a spring activated catch 268, and the retention member 268 is preferably a spring loaded retention member 268. Still further, FIG. 14, shows that in a preferred embodiment, the structural bridge 258, provides a communication link 270, which passing signals between the pair of control modules 252.

Continuing with FIG. 14, in a preferred embodiment, the communication link 270, provides a communication module 272, and in the alternative, provides a signal pathway 274, for use in passing signals between the pair of control modules 252. In a preferred embodiment, the communication module 272 is a wireless communication module 272, which operates in a frequency range of 2.4 GHz. In an alternate preferred embodiment, the wireless communication module 272 is a personal area network. As those skilled in the art, a personal area network (PAN) is a computer network used for communication among computerized devices, including telephones and personal digital assistants. PANs can be used for communication among the personal devices themselves (intrapersonal communication), or for connecting to a higher level network and the Internet (an uplink). A wireless personal area network (WPAN) is a PAN carried over wireless network technologies such as IrDA, Bluetooth, Wireless USB, Z-Wave, ZigBee, or even Body Area Network. The reach of a WPAN varies from a few centimeters to a few meters. A PAN may also be carried over wired computer buses such as USB and FireWire.

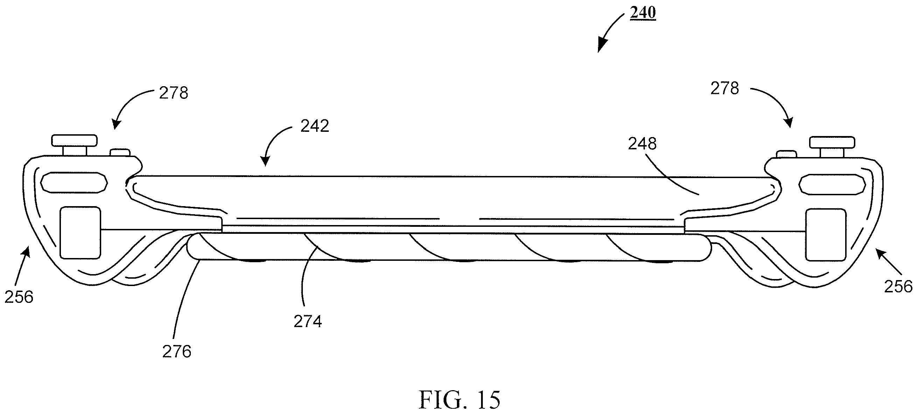

In an embodiment that utilizes the signal pathway 274, as the communication link, the signal pathway 274 may be in the form of a metallic conductor, a fiber optic conductor, a conductive polymer, or the conductive layer of a flex circuit. The skilled artisan will further appreciate that the structural bridge 258 (of FIG. 14), or 276 (of FIG. 15) may be either formed from a ridged material, such as a ridged polymer, or from a flexible material, such as a flexible polymer. In a preferred embodiment, when a flexible material is selected, and the signal pathway 274 is a wired pathway, the signal pathway 274 may be coupled externally to the structural bridge 276, as shown by FIG. 15.

FIG. 15 further shows that in a preferred embodiment, the instructional input device 256, may be an electronic game control module 278 (which may be either removable, or fixed), or a keyboard module 280 (of FIG. 13, which may be either removable, or fixed).

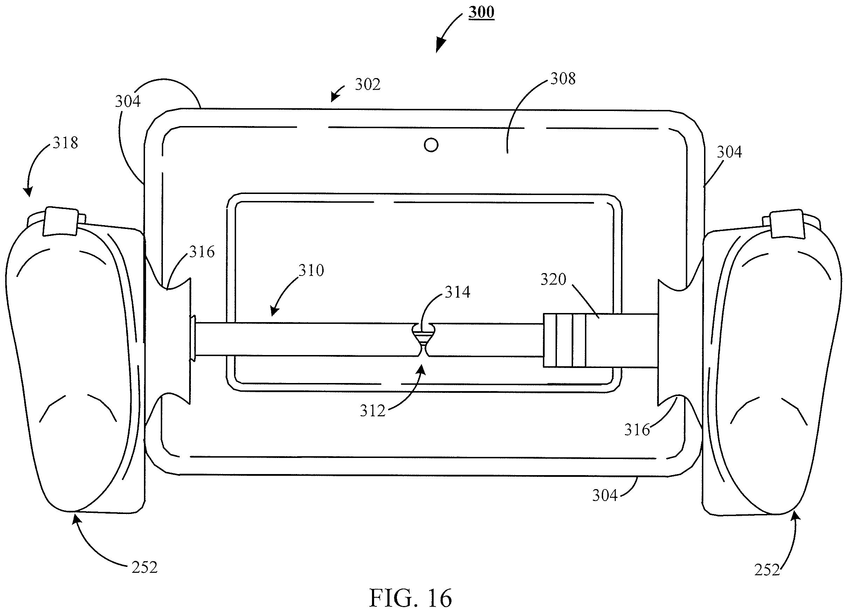

FIG. 16 shows a back plan view of an alternative combination 300, which preferably includes, but is not limited to, a computing device 302 that provides a plurality of sides 304, each of the plurality of sides are disposed between an electronic display screen 306 (of FIG 13) of the computing device and a back 308 of the computing device 302. Preferably, the alternative combination 300 further includes a communication port 310, interacting with the computing device 302. In a preferred embodiment, the communication port 310 provides a communication link 312 (which for purposes of illustration is shown as a wired connection 314, but will be understood to be a wireless connection in an alternative embodiment). Preferably, the communication port 310, further provides a pair of confinement structures 316, the pair of confinement structures 316, which are preferably adjacent to and confining the computing device 302 on at least two opposing sides of the plurality of sides 304 of the computing device 302.

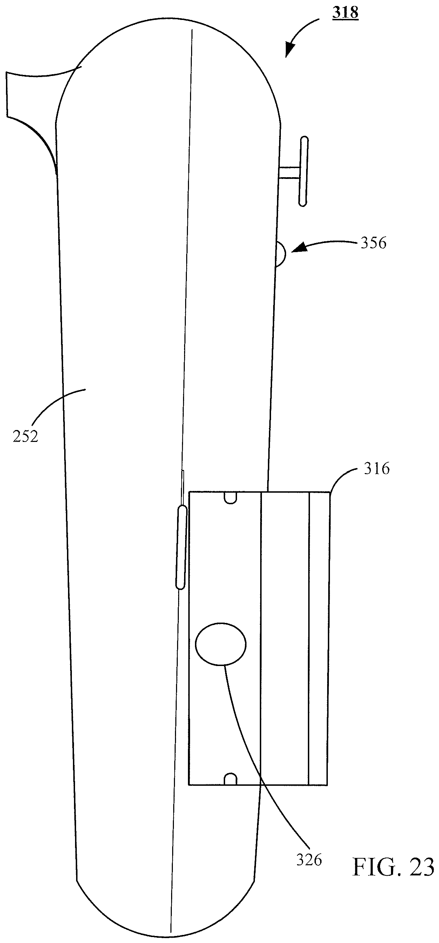

The alternative combination 300, further preferably includes an input device 318 (also referred to herein as input device 114), attached to and in electronic communication with the communication port 310. The input device 318 providing a pair of control modules 252, the pair of control modules 252 providing input module apertures 224 (of FIG. 12), each input module aperture 224 secures an instructional input device 356 (of FIG. 23), or such as 120 of FIG. 11, or 256 of FIG. 13. Preferably, the input module apertures 224, are adjacent each of the at least two opposing sides of the plurality of sides 304, of the computing device 302, and wherein the input device 356, or such as 120 of FIG. 11, or 256 of FIG. 13, is a separate and distinct structure from the communication port 310, forming no structural portion of the communication port 310.

FIG. 16 further shows that in a preferred embodiment, the communication port 310, further includes a fastening mechanism 320. In one embodiment, a soft draw latch, such as that provided by Southco, of 210 N. Brinton Lake Road Concordville, PA 19331, have been shown to be a useful fastening mechanism 320.

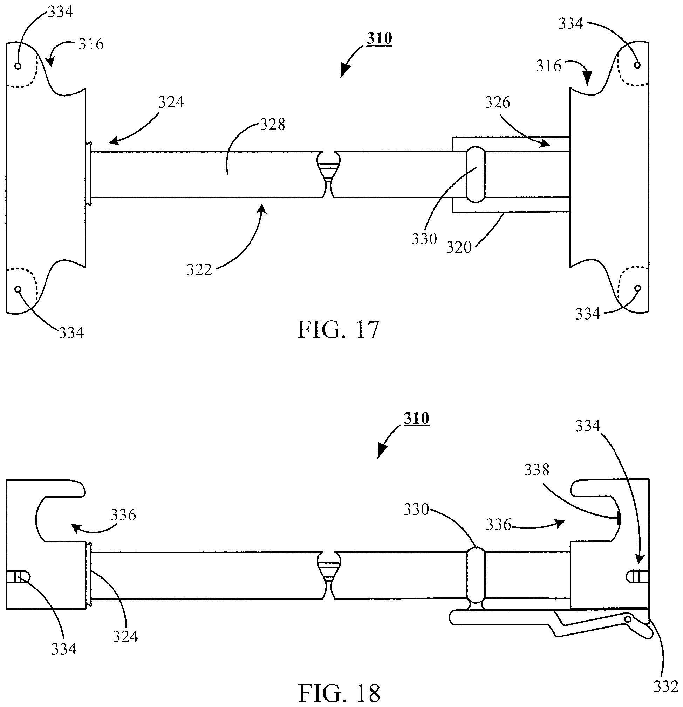

FIG. 17 shows a top view of the communication port 310 that preferably includes a structural bridge 322, securing the pair of confinement structures 316, one to the other. The structural bridge 322 is preferably secured to a select confinement structure of the pair of confinement structures 316 by way of a solid connection 324, and to remaining confinement structure of the pair of confinement structures 316 by way of a slip fit 326. The fastening mechanism 320, is preferably securely fastened to to a conduit 328, of the structural bridge 322, by way of a anchor member 330, the anchor member 330 is preferably positioned in a location adjacent the slip fit 326, and by way of an attachment member 332 (shown in FIG. 18), securely attached to the remaining confinement structure of the pair of confinement structures 316. The attachment member 332, is preferably positioned in a location adjacent the slip fit 326. Operation of the fastening mechanism 320, facilitates an expand and contract of the distance between the pair of confinement structures 316. The expansion and contraction of the distance between the pair of confinement structures 316, facilitates placement of the computing device 302 between the pair of confinement structures 316, the application of sufficient compressive load being placed on the computing device 302 to securely hold the computing device between the pair of confinement structures 316, and an ability to remove the compressive load and allow removal of the computing device from the communication port 310.

FIG. 17 further shows that each of the pair of confinement structures 316, provide a pair of controller docking pins 334, while FIG. 18 shows that each of the pair of confinement structures 316 further provide a computing device cradle 336, and that a select confinement structure of the pair of confinement structures 316 provides a computing device interface feature 338. The interface feature 338, facilitates at least, but not limited to, the provision of power to the computing device 302.

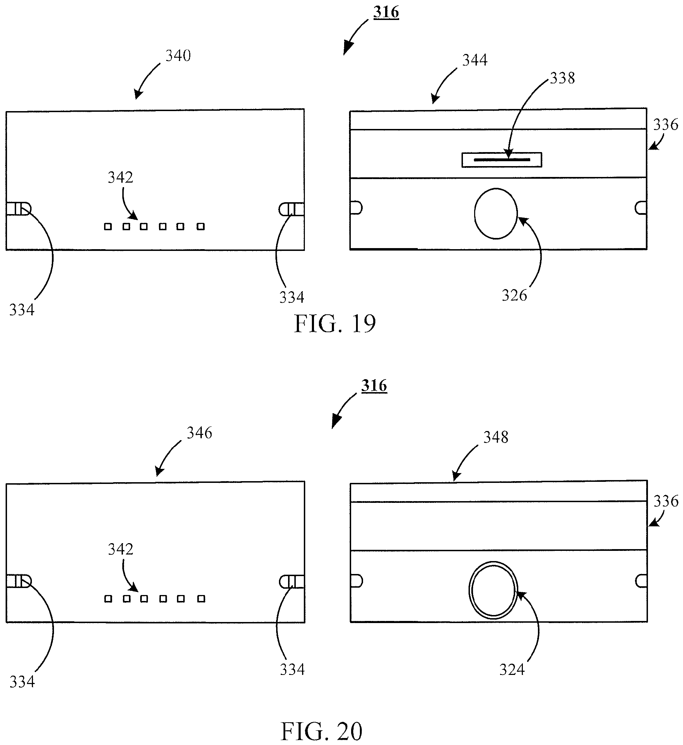

FIG. 19 shows a front view 340, of a first selected confinement structure of the pair of confinement structures 316, which reveals a plurality of signal input lands 342 for use in receiving signals from the input device 318, of FIG. 16, and the pair of controller docking pins 334.

Further shown by FIG. 19, is a back view 344 of the first selected confinement structure of the pair of confinement structures 316, which reveals computing device interface feature 338, the computing device cradle 336, and the slip fit 326.

FIG. 20 shows a front view 346, of a second selected confinement structure of the pair of confinement structures 316, which reveals a plurality of signal input lands 342 for use in receiving signals from the input device 318, of FIG. 16, and the pair of controller docking pins 334.

Further shown by FIG. 20, is a back view 348 of the second selected confinement structure of the pair of confinement structures 316, which reveals, the computing device cradle 336, and the solid connection 324.

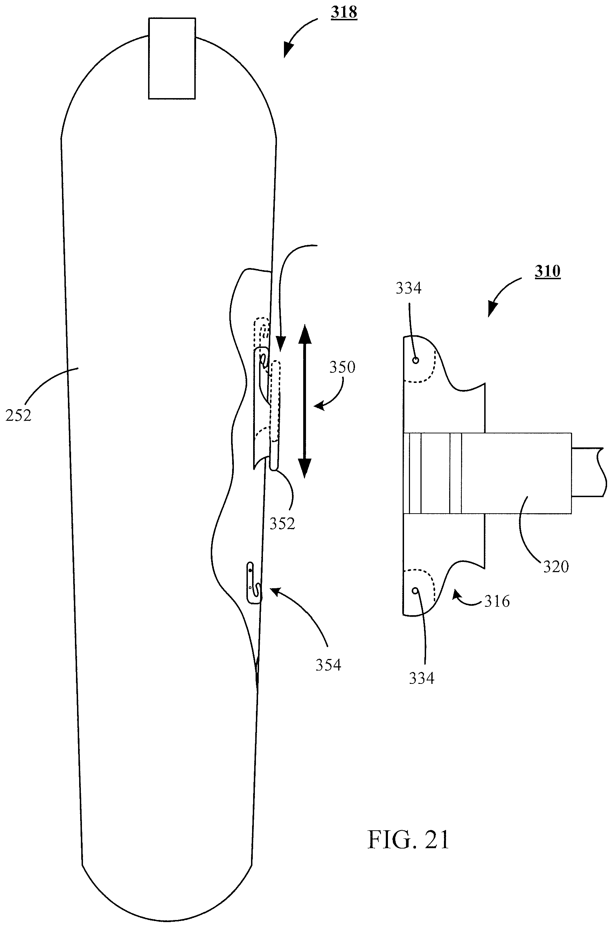

FIG. 21 reveals, for purposes of disclosure and for consistency of views with remaining disclosed figures of an embodiment, a bottom right hand plan view of the input device 318 adjacent the second selected confinement structure of the pair of confinement structures 316, of the communication port 310. Preferably, the control module 252, provides an attachment structure 350, cooperating with the controller docking pins 334, of the communication port 310. The attachment structure 350, secures the input device 318, to the communication port 310. In a preferred embodiment, the attachment structure 350, provides a sliding locking toggle 352, and a fixed locking toggle 354. In the embodiment presented, the sliding locking toggles, 352, interact with the controller docking pins 334, to securely (but removable) fasten the input device 318 to the communication port 310. In a preferred embodiment, the sliding locking toggle 352, is selectively adjustable from an open position, shown in dashed lines, and a closed, or locked position, as shown in solid lines.

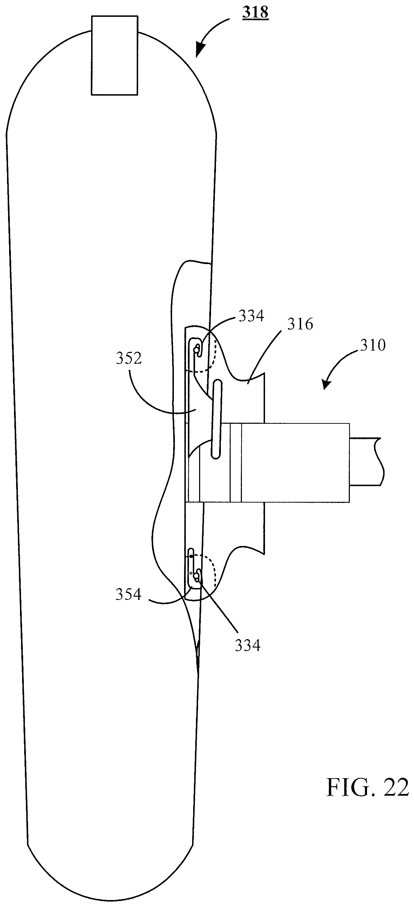

FIG. 22 shows the input device 318, securely fastened to the communication port 310, by way of the attachment structure 350, while FIG. 23 shows the right control module 252, of the input device 318, with its accompanying attachment structure 350 in a locked position, and the special relationship of the control module 252, relative to the confinement structure 316. FIG. 23 further shows an instructional input device 356, such as 120 of FIG. 11, or 256 of FIG. 13, which in a preferred embodiment is a removable instructional input device 356.

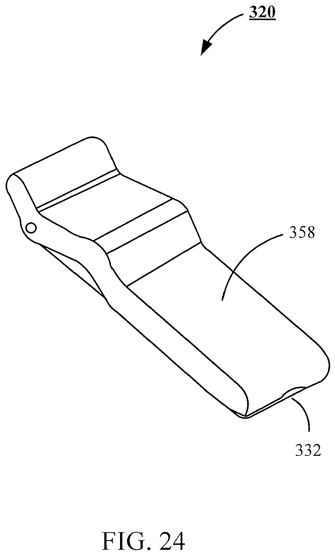

FIG. 24 provides a more insightful presentation of a latch portion 358, of the fastening mechanism 320, relative to the attachment member 332, of the fastening mechanism 320.

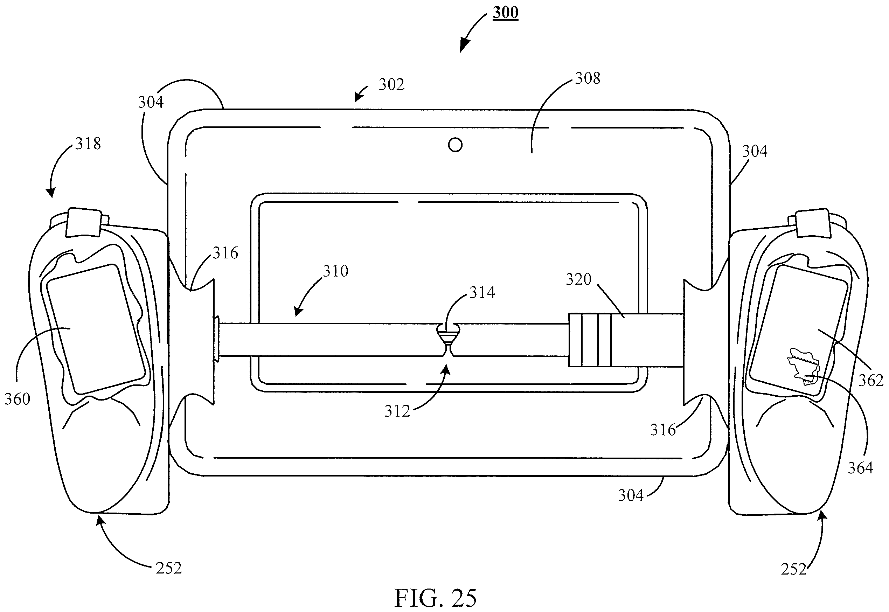

FIG. 25 shows that in a preferred embodiment, the input device 318, includes an auxiliary power source 360, and an auxiliary data storage device 362, which preferably includes a cache portion 364.

It is to be understood that even though numerous characteristics and configurations of various embodiments of the present invention have been set forth in the foregoing description, together with details of the structure and function of various embodiments of the invention, this detailed description is illustrative only, and changes may be made in detail, especially in matters of structure and arrangements of parts within the principles of the present invention to the full extent indicated by the broad general meaning of the terms in which the appended claims are expressed. For example, the particular elements may vary depending on the particular computing device without departing from the scope of the present invention.

## Claims

1. A system comprising:
a computing device (302), the computing device providing a plurality of sides (304), each of the plurality of sides are disposed between an electronic display screen of the computing device and a back (308) of the computing device;
a pair of confinement structures (316), each confinement structure of the pair of confinement structures adjacent to and confining the computing device on at least two opposing sides of the plurality of sides of the computing device, at least one confinement structure (316) of the pair of confinement structures providing a communication link (312) with the computing device (302);
a pair of control modules (252), each control module of the pair of control modules providing input module apertures (224), each input module aperture secures an instructional input device (120, 256, 356), said input module apertures are adjacent each of the at least two opposing sides (304) of the plurality of sides of the computing device (302), each confinement structure (316) of the pair of confinement structures disposed between its corresponding control module (252) of the pair of control modules and the computing device (302); and
a structural bridge (322), the structural bridge interacting with the pair of confinement structures (316), and in which the structural bridge comprises a conduit between the pair of control modules (252); and
**characterized in that** each control module (252) of the pair of control modules is a separate and distinct structure from either confinement structure (316) of the pair of confinement structures, forming no structural portion of either confinement structure (316) of the pair of confinement structures;
each control module (252) of the pair of control modules provides an attachment structure (350) cooperating with its corresponding confinement structure (316),
each attachment structure (350) of each control module (252) secures its associated control module (252) to its associated confinement structure (316);
the structural bridge is a separate and distinct structure from either confinement structure (316) of the pair of confinement structures and further comprises a fastening mechanism cooperating with at least one of the confinement structures (316) of the pair of confinement structures, the fastening mechanism secures the pair of confinement structures one to the other.

2. The system of claim 1, further comprising a data storage device (362) confined within the control module (252) and communicating with the computing device (302).

3. The system of claim 1, further comprising an auxiliary power source (360) confined within the control module (252) and communicating with the computing device (302).

4. The system of claim 1, in which the instructional input device is a video game instructional input device, the video game instructional input device passes signals through the communication link (312) to the computing device (302), the signals controlling images displayed on the display screen of the computing device (302).

5. The system of claim 1, in which the instructional input device is a removable keyboard module.

6. The system of claim 1, in which the structural bridge is a flexible structure.

7. The system of claim 6, in which the flexible structural bridge is a removable flexible structure.

8. The system of claim 1, in which the communication link (312) is a signal pathway.

9. The system of claim 8, in which the signal pathway is a fiber optic pathway.

10. The system of claim 1, in which the communication link (312) provides a communication platform.

11. The system of claim 10, in which the communication platform is a wired communication module.

12. The system of claim 10, in which the communication platform is a wireless communication platform.

## Patentansprüche

1. System, umfassend:
einen Computer (302), wobei der Computer eine Mehrzahl von Seiten (304) bereitstellt, wobei jede der Mehrzahl von Seiten zwischen einem elektronischen Anzeigebildschirm des Computers und einer Rückseite (308) des Computers angeordnet ist;
ein Paar von Begrenzungsstrukturen (316), wobei jede Begrenzungsstruktur des Paares von Begrenzungsstrukturen auf mindestens zwei gegenüberliegenden Seiten der Mehrzahl von Seiten des Computers neben dem Computer ist und diesen begrenzt, wobei mindestens eine Begrenzungsstruktur (316) des Paares von Begrenzungsstrukturen eine Kommunikationsverbindung (312) mit dem Computer (302) bereitstellt;
ein Paar von Steuermodulen (252), wobei jedes Steuermodul des Paares von Steuermodulen Eingabemodulöffnungen (224) bereitstellt, wobei jede Eingabemodulöffnung eine Anweisungseingabevorrichtung (120, 256, 356) sichert, wobei besagte Eingabemodulöffnungen neben jeder der mindestens zwei gegenüberliegenden Seiten (304) der Mehrzahl von Seiten des Computers (302) sind, wobei jede Begrenzungsstruktur (316) des Paares von Begrenzungsstrukturen zwischen ihrem entsprechenden Steuermodul (252) des Paares von Steuermodulen und dem Computer (302) angeordnet ist; und eine strukturelle Brücke (322), wobei die strukturelle Brücke mit dem Paar von Begrenzungsstrukturen (316) interagiert, und worin die strukturelle Brücke eine Leitung zwischen dem Paar von Steuermodule (252) umfasst; und **dadurch gekennzeichnet, dass** jedes Steuermodul (252) des Paares von Steuermodulen eine von einer Begrenzungsstruktur (316) des Paares von Begrenzungsstrukturen separate und verschiedene Struktur ist, die keinen strukturellen Abschnitt einer Begrenzungsstruktur (316) des Paares von Begrenzungsstrukturen bildet;
jedes Steuermodul (252) des Paares von Steuermodulen eine Anbringungsstruktur (350) bereitstellt, die mit ihrer entsprechenden Begrenzungsstruktur (316) zusammenwirkt, wobei jede Anbringungsstruktur (350) jedes Steuermoduls (252) ihr zugehöriges Steuermodul (252) an ihrer zugehörigen Begrenzungsstruktur (316) sichert; die strukturelle Brücke eine von einer Begrenzungsstruktur (316) des Paares von Begrenzungsstrukturen separate und verschiedene Struktur ist und ferner einen Befestigungsmechanismus umfasst, der mit mindestens einer der Begrenzungsstrukturen (316) des Paares von Begrenzungsstrukturen zusammenwirkt, wobei der Befestigungsmechanismus das Paar von Begrenzungsstrukturen aneinander sichert.

2. System nach Anspruch 1, ferner umfassend eine Datenspeichervorrichtung (362), die innerhalb des Steuermoduls (252) eingegrenzt ist und mit dem Computer (302) kommuniziert.

3. System nach Anspruch 1, ferner umfassend eine Hilfsstromquelle (360), die innerhalb des Steuermoduls (252) eingegrenzt ist und mit dem Computer (302) kommuniziert.

4. System nach Anspruch 1, worin die Anweisungseingabevorrichtung eine Videospiel-Anweisungseingabevorrichtung ist, wobei die Videospiel-Anweisungseingabevorrichtung Signale durch die Kommunikationsverbindung (312) an den Computer (302) weitergibt, wobei die Signale Bilder steuern, die auf dem Anzeigebildschirm des Computers (302) angezeigt werden.

5. System nach Anspruch 1, worin die Anweisungseingabevorrichtung ein abnehmbares Tastaturmodul ist.

6. System nach Anspruch 1, worin die strukturelle Brücke eine flexible Struktur ist.

7. System nach Anspruch 6, worin die flexible strukturelle Brücke eine abnehmbare flexible Struktur ist.

8. System nach Anspruch 1, worin die Kommunikationsverbindung (312) ein Signalpfad ist.

9. System nach Anspruch 8, worin der Signalpfad ein faseroptischer Signalpfad ist.

10. System nach Anspruch 1, worin die Kommunikationsverbindung (312) eine Kommunikationsplattform bereitstellt.

11. System nach Anspruch 10, worin die Kommunikationsplattform ein verdrahtetes Kommunikationsmodul ist.

12. System nach Anspruch 10, worin die Kommunikationsplattform eine drahtlose Kommunikationsplattform ist.

## Revendications

1. Système comprenant :
un dispositif informatique (302), le dispositif informatique fournissant une pluralité de côtés (304), les côtés de la pluralité de côtés sont chacun disposés entre un écran d'affichage électronique du dispositif informatique et une partie arrière (308) du dispositif informatique ;
une paire de structures de confinement (316), chaque structure de confinement de la paire de structures de confinement étant adjacente à et confinant le dispositif informatique au niveau d'au moins deux côtés opposés de la pluralité de côtés du dispositif informatique, au moins une structure de confinement (316) de la paire de structures de confinement fournissant une liaison de communication (312) avec le dispositif informatique (302) ;
une paire de modules de commande (252), chaque module de commande de la paire de modules de commande fournissant des ouvertures de module d'entrée (224), chaque ouverture de module d'entrée assujettit un dispositif d'entrée d'instructions (120, 256, 356), lesdites ouvertures de module d'entrée sont adjacentes à chacun desdits deux côtés opposés (304) de la pluralité de côtés du dispositif informatique (302), chaque structure de confinement (316) de la paire de structures de confinement étant disposée entre son module de commande correspondant (252) de la paire de modules de commande et le dispositif informatique (302) ; et
un pont structurel (322), le pont structurel interagissant avec la paire de structures de confinement (316), et dans lequel le pont structurel comprend un conduit entre la paire de modules de commande (252) ; et
**caractérisé en ce que** chaque module de commande (252) de la paire de modules de commande est une structure séparée et distincte d'une structure de confinement (316) de la paire de structures de confinement, ne formant pas une partie structurelle d'une structure de confinement (316) de la paire de structures de confinement ;
chaque module de commande (252) de la paire de modules de commande fournit une structure de fixation (350) coopérant avec sa structure de confinement correspondante (316), chaque structure de fixation (350) de chaque module de commande (252) assujettit son module de commande associé (252) à sa structure de confinement associée (316) ;
le pont structurel est une structure séparée et distincte d'une structure de confinement (316) de la paire de structures de confinement et comprend en outre un mécanisme de fixation coopérant avec au moins une des structures de confinement (316) de la paire de structures de confinement, le mécanisme de fixation assujettit la paire de structures de confinement l'une à l'autre.

2. Système selon la revendication 1, comprenant en outre un dispositif de stockage de données (362) confiné dans le module de commande (252) et communiquant avec le dispositif informatique (302).

3. Système selon la revendication 1, comprenant en outre une source d'alimentation électrique auxiliaire (360) confinée dans le module de commande (252) et communiquant avec le dispositif informatique (302).

4. Système selon la revendication 1, dans lequel le dispositif d'entrée d'instructions est un dispositif d'entrée d'instructions de jeu vidéo, le dispositif d'entrée d'instructions de jeu vidéo fait passer des signaux par la liaison de communication (312) au dispositif informatique (302), les signaux commandant les images affichées à l'écran d'affichage du dispositif informatique (302).

5. Système selon la revendication 1, dans lequel le dispositif d'entrée d'instructions est un module de clavier amovible.

6. Système selon la revendication 1, dans lequel le pont structurel est une structure flexible.

7. Système selon la revendication 6, dans lequel le pont structurel flexible est une structure flexible amovible.

8. Système selon la revendication 1, dans lequel la liaison de communication (312) est un trajet de signal.

9. Système selon la revendication 8, dans lequel le trajet de signal est un trajet de fibre optique.

10. Système selon la revendication 1, dans lequel la liaison de communication (312) fournit une plate-forme de communication.

11. Système selon la revendication 10, dans lequel la plate-forme de communication est un module de communication filaire.

12. Système selon la revendication 10, dans lequel la plate-forme de communication est une plate-forme de communication sans fil.
